# EUROPÄISCHE PATENTANMELDUNG

(11) **EP 1 139 534 A2**
(43) Veröffentlichungstag der Anmeldung: **04.10.2001**
(21) Anmeldenummer: 01107335.0
(22) Anmeldetag: 24.03.2001
(51) Int. Cl.: H02G 1/08

(54) **Vorrichtung zu Einziehen von Elektroinstallationsmaterial in ein Wellrohr**

(30) Priorität: 01.04.2000 DE 10016481
(71) Anmelder: Schlemmer Rohrproduktions GmbH, 85586 Poing (DE)
(72) Erfinder: Voll-Marjanovic, Mile, 97437 Hassfurt (DE)
(74) Vertreter: LOUIS, PÖHLAU, LOHRENTZ & SEGETH

(57) **Zusammenfassung**

Es wird eine Vorrichtung (10) zum Einziehen von Elektroinstallationsmaterial, wie Kabel, Drähte, Leitungen, in ein Wellrohr beschrieben, das entlang einer Mantellinie ein Hakenprofil und ein Widerhakenprofil aufweist und dazwischen längsgeschlitzt und durch Verhaken des Widerhakenprofils mit dem Hakenprofil verschließbar ist. Die Vorrichtung (10) ist zangenartig mit einem ersten und einem zweiten Zangenteil (12, 14) ausgebildet, die sich überkreuzen und die um eine gemeinsame Verbindungsachse (16) verschwenkbar sind. Am ersten und am zweiten Zangenteil (12, 14) ist jeweils ein Klemmorgan (26, 28) zum Festklemmen des Elektroinstallationsmaterials vorgesehen. Am zweiten Zangenteil (14) ist ein Aufweitungsschiffchen (36) zum Aufweiten des Wellrohres entlang seines Längsschlitzes angebracht. Am ersten und am zweiten Zangenteil (12, 14) ist jeweils eine vom entsprechenden Klemmorgan (26, 28) und dem Aufweitungsschiffchen (36) beabstandete Verschließrolle (44, 48) zum Verschließen des durch das Aufweitungsschiffchen (36) aufgeweiteten Wellrohres vorgesehen.

## Beschreibung

Die Erfindung betrifft eine Vorrichtung zum Einziehen von Elektroinstallationsmaterial, wie Kabel, Drähte, Leitungen, in ein Wellrohr, das entlang einer Mantellinie ein Hakenprofil und ein Widerhakenprofil aufweist und dazwischen längsgeschlitzt und durch Verhaken des Widerhakenprofiles mit dem Hakenprofil verschließbar ist.

Ein Wellrohr, das entlang einer Mantellinie ein Hakenprofil und ein Widerhakenprofil aufweist, ist aus der DE 196 41 421 A1 bekannt. Die Patentanmeldung 199 16 642 beschreibt eine Vorrichtung zum Einziehen von Elektroinstallationsmaterial in ein Wellrohr. Diese Vorrichtung weist einen Dorn mit einem ersten und einem zweiten Führungsorgan, ein zwischen dem ersten und dem zweiten Führungsorgan vorgesehenes Schneidelement zum Längsschlitzen des Wellrohres während des Aufschiebens auf den Dorn, eine dem Schneidelement in Aufschieberichtung des Wellrohres stromabwärts nachgeordnete Verschlußeinrichtung zum kontinuierlichen Verschließen des Längsschlitzes durch Verhaken des Widerhakenprofiles mit dem Hakenprofil während des Aufschiebens des Wellrohres auf den Dorn, und eine Halteeinrichtung für das Installationsmaterial auf, die am in Aufschieberichtung des Wellrohres stromabwärtigen Endabschnitt des Dornes vorgesehen ist. Diese Vorrichtung dient also zum Längsschlitzen des Wellrohres, um in das Wellrohr Elektroinstallationsmaterial einziehen und daran unmittelbar anschließend das Wellrohr wieder verschließen zu können.

Bei speziellen Anwendungsbereichen, insbesondere in der Automobilindustrie, hat es sich gezeigt, daß nicht immer von ungeschlitzten Wellrohren ausgegangen werden kann. Das heißt, häufig ist es erforderlich, daß die Wellrohre bereits vor dem Einziehen des Elektroinstallationsmaterials längsgeschlitzt vorliegen. Die Längsschlitzung der Wellrohre erfolgt in diesen Fällen üblicherweise unmittelbar bei der Produktion der Wellrohr am Corrugator durch ein dem Corrugator zugeordnetes stehendes Messer. Um in solche bereits längsgeschlitzte Wellrohre Elektroinstallationsmaterial einzuziehen, ist der Arbeitsgang des Längsschlitzen des Wellrohres, wie er in der eingangs zitierten DE 196 41 421 A1 bzw. in der ebenfalls eingangs zitierten älteren Patentanmeldung 199 16 642 beschrieben ist, nicht erforderlich. Das bedeutet, daß auch ein Dorn, wie er in der mehrfach zitierten Patentanmeldung 199 16 642 vorgesehen ist, nicht erforderlich ist, weil eine Orientierung des längszuschlitzenden Wellrohres in Bezug zu dem Dorn entbehrlich ist. Bei einem bereits längsgeschlitzten Wellrohr ist nur noch eine Aufweitung des Wellrohres erforderlich, um das Elektroinstallationsmaterial in das Wellrohr einziehen zu können. Daran schließt sich unmittelbar ein Verschließen des Wellrohres an.

Der Erfindung liegt die Aufgabe zugrunde, eine Vorrichtung der eingangs genannten Art zu schaffen, die einfach ausgebildet ein Aufweiten eines längsgeschlitzten Wellrohres, um Elektroinstallationsmaterial entlang des jeweils aufgeweiteten Längsabschnittes des Wellrohres in das Wellrohr einziehen zu können, und daran unmittelbar anschließend ein Verschließen des Wellrohres ermöglicht.

Diese Aufgabe wird bei einer Vorrichtung der eingangs genannten Art erfindungsgemäß dadurch gelöst, daß die Vorrichtung zangenartig mit einem ersten und einem zweiten Zangenteil ausgebildet ist, die sich überkreuzen und die um eine gemeinsame Verbindungsachse verschwenkbar sind, wobei am ersten und am zweiten Zangenteil jeweils ein Klemmorgan zum Festklemmen des in das Wellrohr einzuziehenden Elektroinstallationsmaterials, am zweiten Zangenteil ein Aufweitungsschiffchen zum Aufweiten des Wellrohres entlang seines Längsschlitzes und am ersten und am zweiten Zangenteil jeweils eine vom entsprechenden Klemmorgan und dem Aufweitungsschiffchen beabstandete Verschließrolle zum Verschließen des Wellrohres vorgesehen ist.

Die erfindungsgemäße Vorrichtung weist einen einfachen Aufbau und den Vorteil einer einfachen und zuverlässigen Handhabbarkeit auf, so daß sie vor Ort, d.h. beispielsweise in der Automobilindustrie, optimal einsetzbar ist. Selbstverständlich ist die erfindungsgemäße zangenartige Vorrichtung auch bei anderen Anwendungsgebieten einsetzbar.

Bei der erfindungsgemäßen Vorrichtung weist jedes Zangenteil zweckmäßigerweise einen Vorderabschnitt und einen Griffabschnitt auf, zwischen welchen die Verbindungsachse vorgesehen ist, mittels welcher die beiden Zangenteile miteinander eine Zangenbewegung ausführend schwenkbeweglich verbunden sind. Die Klemmorgane sind bei der erfindungsgemäßen Vorrichtung zweckmäßigerweise an den Vorderabschnitten der Zangenteile vorgesehen. Dabei kann das eine Klemmorgan zwei voneinander beabstandete, ausgebaucht bogenförmige Klemmfinger und das zweite Klemmorgan einen bogenförmigen ausgebauchten Klemmfinger und eine Grenzzinke aufweisen, die zwischen die beiden Klemmfinger des ersten Klemmorganes hineinsteht. Eine solche Ausbildung weist den Vorteil auf, daß das in das längsgeschlitzte Wellrohr einzuziehende Elektroinstallationsmaterial zwischen den beiden Klemmorganen sicher und geeignet positioniert festhaltbar ist, um das Elektroinstallationsmaterial in das Wellrohr einziehen zu können.

Das Aufweitungsschiffchen ist bei der erfindungsgemäßen Vorrichtung zweckmäßigerweise am zweiten Zangenteil über dem zugehörigen zweiten Klemmorgan vorgesehen. Um mit einfachen Mitteln eine einfache Anpassung an die jeweiligen Gegebenheiten zu erzielen, kann das Aufweitungsschiffchen am zweiten Zangenteil verstellbar angebracht sein.

Das Aufweitungsschiffchen ist vorzugsweise als U-förmiger Kragen mit runden Seitenwangen ausgebildet. Die Außenkontur der runden Seitenwangen ist hierbei zweckmäßigerweise an die lichte Innenkontur des jeweiligen Wellrohres angepaßt.

Die Verschließrollen sind bei der erfindungsgemäßen Vorrichtung zweckmäßigerweise an den Griffabschnitten der Zangenteile in der Nachbarschaft der gemeinsamen Verbindungsachse vorgesehen. Die beiden Verschließrollen weisen vorzugsweise einen abgerundet taillierten Verschließabschnitt auf und sind an den Zangenteilen derartig gelagert, daß die Verschließabschnitte axial gegeneinander passend versetzt sind. Hierdurch wird zuverlässig erreicht, daß das Widerhakenprofil mit dem Hakenprofil des längsgeschlitzten Wellrohres verhakt, d.h. das Wellrohr verschlossen wird, wenn es relativ zur zangenartigen Vorrichtung eine axiale Relativbewegung ausführt. Der abgerundet taillierte Verschließabschnitt der beiden Verschließrollen ist zweckmäßigerweise an die Außenumfangskontur des jeweiligen Wellrohres angepaßt. Eine einfache und zeitsparende Anpassung an die jeweiligen Gegebenheiten, was beispielsweise die Abmessungen des jeweiligen Wellrohres betrifft, ist möglich, wenn die beiden Verschließrollen an den Zangenteilen verstellbar angebracht sind.

Um die zangenartige Vorrichtung während des Einführens des Elektroinstallationsmaterials zwischen die Klemmorgane und durch das Aufweitungsschiffchen in einem geöffneten Zustand zu halten, ist es bevorzugt, wenn zwischen den beiden Griffabschnitten der Zangenteile ein Federelement vorgesehen ist. Bei diesem Federelement kann es sich um eine Schraubendruckfeder handeln, die zwischen den beiden Griffabschnitten festgelegt ist.

Weitere Einzelheiten, Merkmale und Vorteile ergeben sich aus der nachfolgenden Beschreibung eines in der Zeichnung dargestellten Ausführungsbeispieles der erfindungsgemäßen zangenartigen Vorrichtung zum Einziehen von Elektroinstallationsmaterial, wie Kabel, Drähte, Leitungen. Es zeigen:
- Figur 1: eine räumliche Darstellung der zangenartigen Vorrichtung,
- Figur 2: eine Ansicht der Vorrichtung gemäß Figur 1 in Blickrichtung von oben,
- Figur 3: eine Seitenansicht der Vorrichtung gemäß den Figuren 1 und 2, und
- Figur 4: eine Vorderansicht der Vorrichtung gemäß den Figuren 1 bis 3 in Blickrichtung des Pfeiles IV in Figur 1.

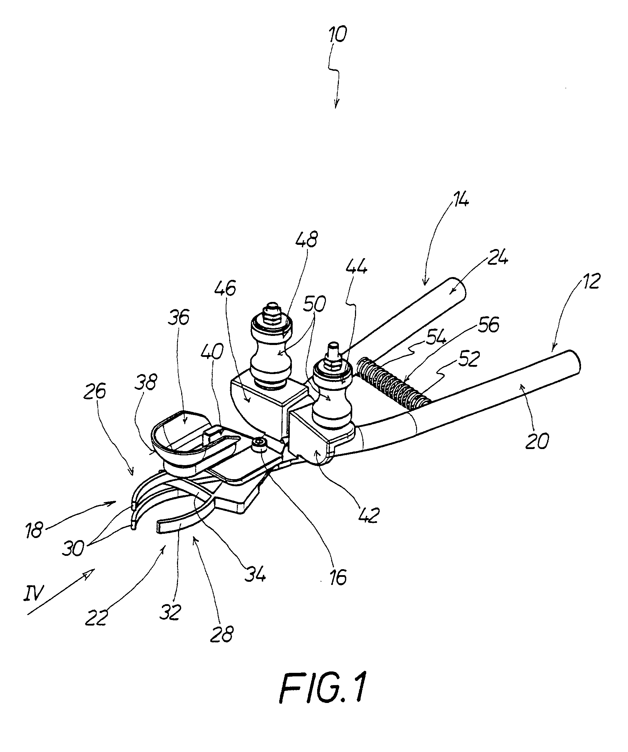

Die Figuren 1 bis 4 zeigen eine Ausbildung der zangenartigen Vorrichtung 10 zum Einziehen von Elektroinstallationsmaterial wie Kabel, Drähte oder Leitungen in ein Wellrohr, das entlang einer Mantellinie ein Hakenprofil und ein Widerhakenprofil aufweist und dazwischen längsgeschlitzt ist. Ein solches Wellrohr ist beispielsweise in der DE 196 41 4 21 A1 offenbart. Die Vorrichtung 10 weist ein erstes Zangenteil 12 und ein zweites Zangenteil 14 auf, die sich überkreuzen und die um eine gemeinsame Verbindungsachse 16 verschwenkbar sind. Das erste Zangenteil 12 weist einen Vorderabschnitt 18 und einen Griffabschnitt 20 auf. Entsprechend weist das zweite Zangenteil 14 einen Vorderabschnitt 22 und einen Griffabschnitt 24 auf. Die gemeinsame Verbindungsachse 16 befindet sich im Kreuzungsbereich der beiden Zangenteile 12 und 14 zwischen den Vorderabschnitten 18 und 22 und den Griffabschnitten 20 und 24 der Zangenteile 12 und 14.

Am Vorderabschnitt 18 des ersten Zangenteiles 12 ist ein Klemmorgan 26 und am Vorderabschnitt 22 des zweiten Zangenteiles 14 ist ein zweites Klemmorgan 28 vorgesehen. Die Klemmorgane 26 und 28 dienen zum Festklemmen des jeweiligen, in ein Wellrohr einzuziehenden Elektroinstallationsmaterials. Das erste Klemmorgan 26 weist zwei voneinander beabstandete, ausgebaucht bogenförmige Klemmfinger 30 auf. Das zweite Klemmorgan 28 weist einen bogenförmig ausgebauchten Klemmfinger 32 und eine Grenzzinke 34 auf, die zwischen die beiden Klemmfinger 30 des ersten Klemmorganes 26 hineinsteht.

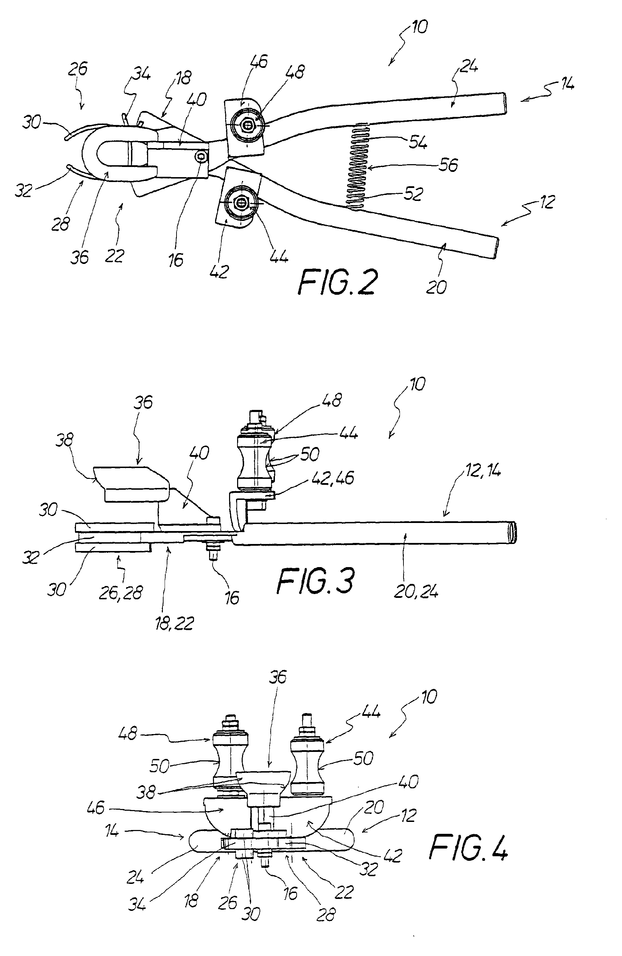

Am Vorderabschnitt 22 des zweiten Zangenteiles 14 ist ein Aufweitungsschiffchen 36 angebracht, das zum Aufweiten eines Wellrohres während des Einziehens eines Elektroinstallationsmaterials entlang seines Längsschlitzes dient. Das Aufweitungsschiffchen 36 ist am Vorderabschnitt 22 des zweiten Zangenteiles 14 derartig angebracht, daß es über dem ersten und dem zweiten Klemmorgan 26 und 28 vorgesehen ist, wie die Figur 2 zeigt. Das Aufweitungsschiffchen 36 ist als U-förmiger Kragen mit runden Seitenwangen 38 (sh. die Figuren 1, 3 und 4) ausgebildet. Das Aufweitungsschiffchen 36 ist an einer abgewinkelten Befestigungskonsole 40 fixiert, die mittels der Verbindungsachse 16 am Vorderabschnitt 22 des zweiten Zangenteiles 14 verstellbar befestigt ist.

Am Griffabschnitt 20 des ersten Zangenteiles 12 ist an einer Konsole 42 eine Verschließrolle 44 und am Griffabschnitt 24 des zweiten Zangenteiles 14 ist an einer Konsole 46 eine zweite Verschließrolle 48 gelagert. Die beiden Verschließrollen 44 und 48 sind jeweils mit einem abgerundet taillierten Verschließabschnitt 50 ausgebildet. Die Verschließrollen 44 und 48 sind an der zangenartigen Vorrichtung 10 derartig angeordnet, daß ihre Verschließabschnitte 50 gegeneinander geeignet axial versetzt sind, wie insbesondere aus den Figuren 3 und 4 ersichtlich ist.

Vom Griffabschnitt 20 des ersten Zangenteiles 12 steht ein Zapfen 52 und vom Griffabschnitt 24 des zweiten Zangenteiles 14 steht ein Zapfen 54 nach innen. Die sich gegenüberliegenden Zapfen 52 und 54 dienen zum Festlegen eines Federelementes 56, das als Schraubendruckfeder ausgebildet ist.

Die Funktionsweise der erfindungsgemäßen zangenartigen Vorrichtung 10 ist wie folgt:

Im durch das Federelement 56 geöffneten Zustand der zangenartigen Vorrichtung 10 wird das in das längsgeschlitzte Wellrohr einzuziehende Elektroinstallationsmaterial zwischen den geöffneten Klemmorganen 26 und 28 von unten durch das Aufweitungsschiffchen 36 eingesteckt. Anschließend wird die zangenartige Vorrichtung 10 durch Zusammendrücken der Griffabschnitte 20 und 24 geschlossen, wobei das Elektroinstallationsmaterial durch die Klemmorgane 26 und 28 festgeklemmt wird. Danach wird die zangenartige Vorrichtung 10 mit dem festgeklemmten Elektroinstallationsmaterial in das längsgeschlitzte Wellrohr - oder umgekehrt - eingeschoben. Dabei wird das längsgeschlitzte Wellrohr mit Hilfe des Aufweitungsschiffchens 36 an der entsprechenden Stelle aufgeweitet, um das Elektroinstallationsmaterial in das Wellrohr einzuziehen und unmittelbar anschließend wird das Wellrohr mit Hilfe der Verschließrollen 44 und 48 wieder verschlossen. Die zangenartige Vorrichtung 10 mit dem festgeklemmten Elektroinstallationsmaterial wird nun relativ zum Wellrohr so weit verschoben, bis die jeweils gewünschte Einzugslänge erreicht ist.

## Patentansprüche

1. Vorrichtung zum Einziehen von Elektroinstallationsmaterial, wie Kabel, Drähte, Leitungen, in ein Wellrohr, das entlang einer Mantellinie ein Hakenprofil und ein Widerhakenprofil aufweist und dazwischen längsgeschlitzt und durch Verhaken des Widerhakenprofils mit dem Hakenprofil verschließbar ist,
**dadurch gekennzeichnet,**
**daß** die Vorrichtung (10) zangenartig mit einem ersten und einem zweiten Zangenteil (12 und 14) ausgebildet ist, die sich überkreuzen und um eine gemeinsame Verbindungsachse (16) verschwenkbar sind, wobei am ersten und am zweiten Zangenteil (12 und 14) jeweils ein Klemmorgan (26, 28) zum Festklemmen des Elektroinstallationsmaterials, am zweiten Zangenteil (14) ein Aufweitungsschiffchen (36) zum Aufweiten des Wellrohres entlang seines Längsschlitzes und am ersten und am zweiten Zangenteil (12 und 14) jeweils eine vom entsprechenden Klemmorgan (26, 28) und dem Aufweitungsschiffchen (36) beabstandete Verschließrolle (44, 48) zum Verschließen des Wellrohres vorgesehen ist.

2. Vorrichtung nach Anspruch 1,
**dadurch gekennzeichnet,**
**daß** jedes Zangenteil (12, 14) einen Vorderabschnitt (18, 22) und einen Griffabschnitt (20, 24) aufweist, zwischen welchen die Verbindungsachse (16) vorgesehen ist.

3. Vorrichtung nach Anspruch 1 und 2,
**dadurch gekennzeichnet,**
**daß** die Klemmorgane (26, 28) an den Vorderabschnitten (18, 22) der Zangenteile (12, 14) vorgesehen sind.

4. Vorrichtung nach einem der vorhergehenden Ansprüche,
**dadurch gekennzeichnet,**
**daß** das eine Klemmorgan (26) zwei voneinander beabstandete, ausgebaucht bogenförmige Klemmfinger (30) und das zweite Klemmorgan (28) einen bogenförmig ausgebauchten Klemmfinger (32) und eine Grenzzinke (34) aufweist, die zwischen die beiden Klemmfinger (30) des ersten Klemmorganes (26) hineinsteht.

5. Vorrichtung nach einem der Ansprüche 1 bis 4,
**dadurch gekennzeichnet,**
**daß** das Aufweitungsschiffchen (36) am zweiten Zangenteil (14) über dem zugehörigen zweiten Klemmorgan (28) vorgesehen ist.

6. Vorrichtung nach Anspruch 5,
**dadurch gekennzeichnet,**
**daß** das Aufweitungsschiffchen (36) am zweiten Zangenteil (14) verstellbar angebracht ist.

7. Vorrichtung nach einem der Ansprüche 1 bis 6,
**dadurch gekennzeichnet,**
**daß** das Aufweitungsschiffchen (36) als U-förmiger Kragen mit runden Seitenwangen (38) ausgebildet ist.

8. Vorrichtung nach einem der Ansprüche 1 bis 7,
**dadurch gekennzeichnet,**
**daß** die Verschließrollen (44, 48) an den Griffabschnitten (20, 24) der Zangenteile (12,14) in der Nachbarschaft der gemeinsamen Verbindungsachse (16) vorgesehen sind.

9. Vorrichtung nach einem der Ansprüche 1 bis 8,
**dadurch gekennzeichnet,**
**daß** die beiden Verschließrollen (44, 48) einen abgerundet taillierten Verschließabschnitt (50) aufweisen und an den Zangenteilen (12, 14) derartig gelagert sind, daß die Verschließabschnitte (50) axial gegeneinander versetzt sind.

10. Vorrichtung nach einem der Ansprüche 1 bis 9,
**dadurch gekennzeichnet,**
**daß** zwischen den beiden Griffabschnitte (20, 24) der Zangenteile (12, 14) ein Federelement (56) vorgesehen ist.
